# EUROPEAN PATENT SPECIFICATION

(11) **EP 1 146 326 B1**
(45) Date of publication and mention of the grant of the patent: **05.08.2009**
(21) Application number: 01303159.6
(22) Date of filing: 03.04.2001
(51) Int. Cl.: G01L 19/00, G01L 9/04, G01L 9/00

(54) **Pressure sensor mounting**
Druckwandlermontage
Montage d'un capteur de pression

(30) Priority: 14.04.2000 JP 2000113084
(43) Date of publication of application: 17.10.2001
(73) Proprietor: Nagano Keiki Co., Ltd., Ohta-ku, Tokyo (JP)
(72) Inventor: Yamaura, Kunihiro, c/o Nagano Keiki Co.Ltd., Tokyo (JP); Yamagishi, Kouzou, c/o Nagano Keiki Co.Ltd., Tokyo (JP); Sato, Masatsugu, c/o Nagano Keiki Co.Ltd., Tokyo (JP); Tohkairin, Akira, c/o Aoyama Seisakusyo Co.Ltd., Hitachinaka, City, Ibaraki (JP); Ose, Katsumi, c/o Aoyama Seisakusyo Co.Ltd., Hitachinaka, City, Ibaraki (JP)
(74) Representative: Haley, Stephen

(56) References cited:
- EP-A- 0 488 446
- US-A- 3 851 530
- US-A- 4 527 430
- US-A- 5 144 843

## Description

The present invention relates to a pressure sensor having a structure, which is adapted to detection of extra-high pressure of for example 200 MPa or more such as fuel pressure in a fuel injection apparatus of a vehicle.

Measure of fluid pressure utilizes a pressure sensor, which detects a pressure difference between pressure to be detected and an atmospheric pressure to convert the same into an electric signal, as disclosed in Japanese Laid-Open Patent Application No. H01-96523 and Japanese Laid-Open Patent Application No. H01-296130. As shown in FIGS. 9 and 10, the conventional pressure sensor has a joint member 2 and a pressure-detecting element 3. The joint member 2 has a fitting means such as a screw portion, a flange portion or the like for securing a pressure sensor body to a fluid channel wall 1 for a fluid, and a sealing means such as an O-ring groove, a tapered face, a sealing surface or the like for providing an pressure-tight condition between the pressure sensor body and the fluid channel. The pressure-detecting element 3 has a pressure diaphragm 3a and a strain gage 3b provided on the pressure diaphragm 3a. An output device (not shown), which is electrically connected to the strain gage 3b, is provided above the pressure-detecting element 3. Pressure of the fluid introduced into a pressure introduction hole 2a of the joint member 2 causes the pressure diaphragm 3a to strain. The strain gage 3b detects the strain of the pressure diaphragm 3a with the result that the output device outputs an electric signal corresponding to value of resistance of the strain gage 3b.

In case where the pressure range to be detected is increased for example to 200 MPa or more, it is necessary to increase the mechanical strength of the portion of the pressure sensor accordingly, to which pressure is applied.

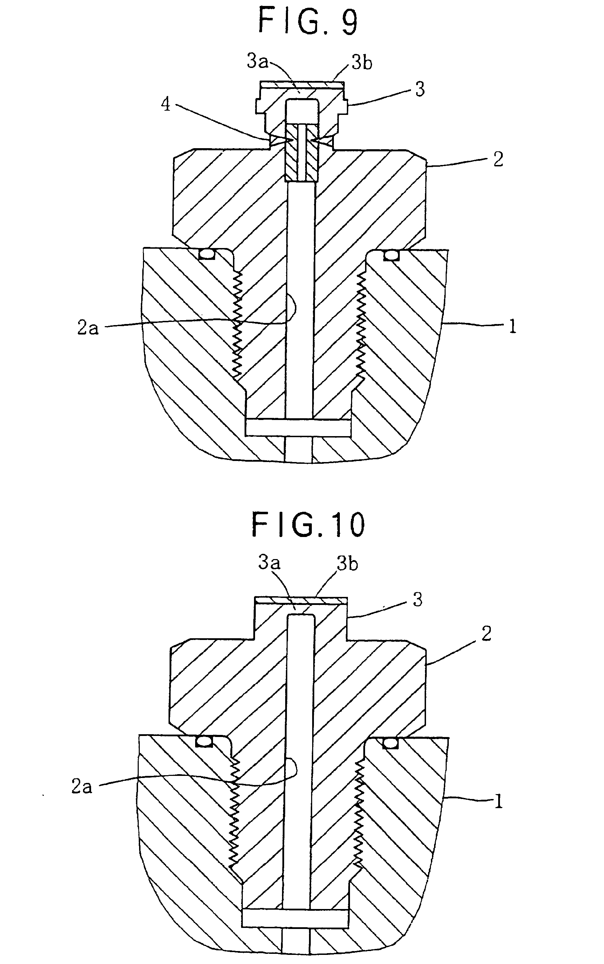

In the pressure sensor as shown for example in FIG. 9, the joint member 2 and the pressure-detecting element 3 are connected to each other by welding. Improvement in mechanical strength of the welded portion 4 requires for example an enlargement of the connected area. However, increase in penetration depth to provide a sufficient connected area leads to the increased heat input through the welding. The increased heat input may damage the thin-film type strain gage 3b. It is therefore impossible to adopt such a measure to enlarge the connected area. In addition, deposited metal caused by the welding and the adjacent heat-affected zone may more easily be subjected to an intergranular corrosion and stress corrosion in comparison with the non-heat-affected zone, aggravating corrosion due to contact with the fluid, thus leading to deterioration of sensing properties.

It is also conceivable to adhere a semiconductor chip serving as a strain gage substituting the thin-film type strain gage 3b on the upper surface of the metallic diaphragm 3a, in order to avoid the damage to the thin-film type strain gage 3b due to the welding. It is however hard to make the thickness of an adhesive layer uniform, thus leading to irregularity of the sensing properties. There may occur problems of an output drift caused by slip of the adhesive layer and deformation thereof after a lapse of time. Existence of the adhesive layer between the diaphragm 3a and the semiconductor chip serving as the strain gage 3b may cause a transfer lag of strain, resulting in delay of an output response speed. In addition, it is hard to place the semiconductor chip on the most suitable position of the metallic diaphragm 3a, leading to irregularity of properties (for example, an output span) and inconvenience in a subsequent step for making an electrical connection (for example, a wire bonding) to the output device.

The other conventional pressure sensor as shown in FIG. 10 has a joint member 2 and a pressure-detecting element 3, which are integrally formed with each other, thus avoiding the above-mentioned problem of decreased mechanical strength caused by welding. However, a small-diameter deep hole with one end closed has to be formed as the pressure introduction hole 2a, providing a problematic matter. Metal having an excellent mechanical strength and an excellent spring property (for example, precipitation hardened stainless steel SUS 630) is usually used for forming the pressure-detecting element 3. Such kind of steel generally has a low cutting workability, making it difficult to form an appropriate shape in a precise and highly effective manner. In addition, the portion defining the closed end of the pressure introduction hole 2a is formed as the diaphragm 3a. Precision of formation of the diaphragm 3a has an influence on accuracy property, durability and the like of the pressure sensor. Moreover, wear of the cutting tool causes remarkable deterioration of the above-mentioned precision of formation.

With respect to an apparatus for forming a thin film on the diaphragm 3a, there is required a step for evacuating a chamber. It is therefore reasonable to make the capacity of the chamber as smaller as possible. Further, it is preferable to place workpieces in a number as large as possible in the chamber, in order to manufacture the increased number of pressure sensor through a single step for forming the thin film. Reduce in the capacity of the chamber is restricted by the integral structure of the joint member 2 with the pressure-detecting element 3. As a result, the number of workpieces to be placed into the chamber is limited accordingly, thus leading to a lower manufacturing efficiency in the forming step of the thin-film type strain gage 3b.

In addition, demands relative to the joint member 2 depend on its purposes and a user with the result that a number of modifications of the joint member 2 are required to satisfy all the demands, leading to restriction in the manufacturing equipment and difficulty in manufacture of all the joint members modified. US 5 144 843 discloses a pressure sensor according to the preamble of claims 1 or 6. Other prior art devices can be found disclosed in EP0488446 and US4527430.

An object of the present invention is therefore to provide a pressure sensor, which is adapted to detection of extra-high pressure. In such a sensor, it is possible to prevent fluid from coming into contact with a connected area of a joint member and a pressure-detecting element that are separately formed from each other, ensure a condition that, even when welding is applied to the connecting portion between the joint member and the pressure-detecting element, welding heat does not exert adverse influence on a thin-film type strain gage of the pressure-detecting element, avoid the contact of the welded portion with the fluid and provide an easy mounting operation of the joint member, which is suitable for purposes and demands of a user.

In order to solve the problems associated with the prior art, the present invention provides a pressure sensor as defined in claims 1 or 6.

The pressure-detecting element may have a pressure detection portion, said pressure detection portion comprising a thin-film type strain gage, which is provided on a metallic diaphragm of the pressure-detecting element through an insulating film.

The joint member and the pressure-detecting element may be connected with each other so as to permit a relative movement to each other.

The joint member and the pressure-detecting element may be fixed to each other.

The pressure-detecting element may have at least one part, which is formed through a forging method.
FIG. 1 is a vertical cross-sectional view illustrating essential portions of a pressure sensor of the first embodiment of the present 25 invention;
FIG. 2 is a vertical cross-sectional view illustrating a state in which the pressure sensor is sealed by a metallic conical packing;
FIG. 3 is a vertical cross-sectional view illustrating a state in which the pressure sensor is sealed by a metallic lens-shaped packing;
FIG. 4 is a vertical cross-sectional view illustrating a state in which the pressure sensor is sealed by a metallic lens-shaped packing having the different shape from that as shown in FIG. 3;
FIG. 5 is a vertical cross-sectional view illustrating a state in which the pressure sensor is sealed by a metallic O-shaped ring or a metallic C-shaped ring;
FIG. 6 is a vertical cross-sectional view illustrating a state in which the pressure sensor is sealed by a ring-shaped projection, which is integrally formed with the pressure-detecting element;
FIG. 7 is a vertical cross-sectional view illustrating the pressure sensor of the second embodiment of the present invention;
FIG. 8 is a vertical cross-sectional view illustrating the pressure sensor of the third embodiment of the present invention;
FIG. 9 is a vertical cross-sectional view illustrating one example of the conventional pressure sensor; and
FIG. 10 is a vertical cross-sectional view illustrating the other example of the conventional pressure sensor.

Now, embodiments of a pressure sensor of the present invention will be described in detail below with reference to the accompanying drawings.

### <FIRST EMBODIMENT>

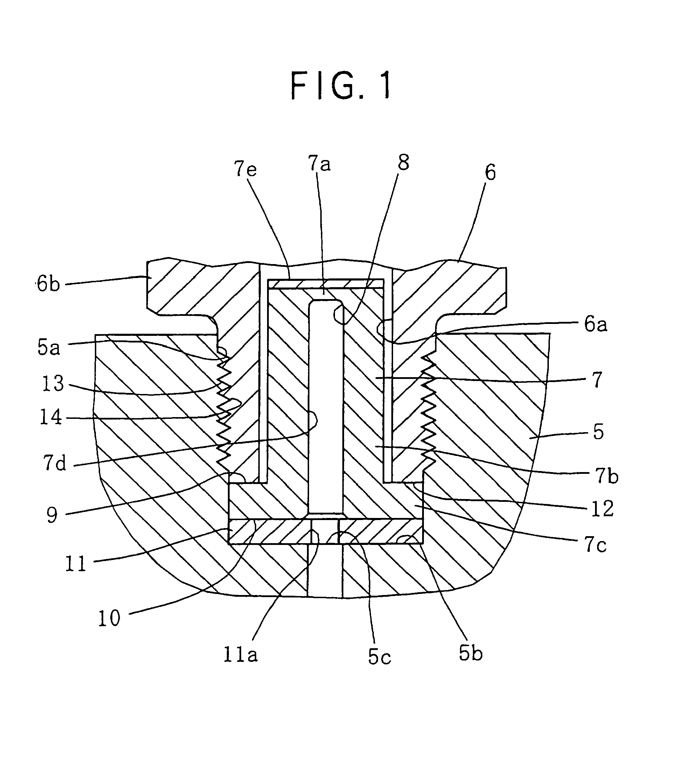

A pressure sensor is used to detect extra-high pressure (for example 200 MPa or more) such as fuel pressure in a fuel injection apparatus of a vehicle engine. As shown in FIG. 1, the pressure sensor has a joint member 6 for securing a pressure sensor body to a fluid channel wall 5 for fluid; and a pressure-detecting element 7 mounted on the joint member 6. The pressure-detecting element 7 is separately formed from the joint member 6.

The fluid channel wall 5 for the fluid is for example a wall of a chamber of the fuel injection apparatus. The pressure sensor is secured through the joint member 6 onto the fluid channel wall 5 serving for example as the wall of the above-mentioned chamber. The fluid channel wall 5 has a recess portion 5a formed therein, to which the pressure sensor is connected. The recess portion 5a is provided on its bottom with a connection face 5b with which an opening end 5c of the fluid channel communicates.

The pressure-detecting element 7 and the joint member 6 are separately formed from each other, permitting to unification of a shape of pressure-detecting element 7, irrespective of the entire configuration. As a result, an effective manufacture can be achieved with the use of independent manufacturing equipment. It is therefore possible to cope with many applications relative to the joint member 6, taking into consideration purposes of the pressure sensor and demands of a user. The number of materials to be selected to form the joint member 6 increases. It is therefore possible to select a suitable material, which is inexpensive and excellent in workability, while ensuring a sufficient strength.

The pressure-detecting element 7 has a diaphragm 7a, a tubular support base 7b for supporting the diaphragm 7a, a seat plate 7c provided on the opposite end of the support base 7b to the diaphragm 7a so as to be formed into a shape of flange, and a pressure introduction hole 7d extending from the lower surface of the seat plate 7c to the inner surface of the diaphragm 7a. These parts are formed by the conventional forging method disclosed for example in Japanese Laid-Open Patent Application No. H10-46239. In order to prepare the pressure-detecting element 7 on the basis of the above-mentioned forging method, the forging is applied to material of precipitation-hardened stainless steel to form the pressure introduction hole 7d and the inner surface of the diaphragm 7a. A turning is carried out to cut the material so as to form the outer surface of the diaphragm 7a, the outer surface of the support base 7b as well as the seat plate 7c. When the pressure sensor is to be used under extra-high pressure (for example 200 MPa or more), it is preferable to adopt a surface configuration having a small unevenness and roughness on inner surfaces of the diaphragm 7a and the support base 7b of the pressure-detecting element 7, to which pressure is applied, in order to avoid stress concentration. The application of the forging to the material of precipitation-hardened stainless steel can provide an appropriate unevenness and roughness of the above-mentioned inner surfaces in comparison with the cutting work. It is also possible to form more effectively a boundary portion between the diaphragm 7a and the support base 7b into a round shape with a higher accuracy in comparison with the cutting work. The surface of the diaphragm 7a to which pressure is to be applied may be subjected to a finishing treatment such as a polishing or the like to improve the unevenness and roughness of the above-mentioned surface, for the purpose of improving reliability of the pressure sensor to be used under the extra high pressure. It is preferable to increase the radius of the boundary portion having the round-shape between the diaphragm 7a and the support base 7b within a prescribed range so long as detection of strain can be made through the thin-film type strain gage 7e existing on the diaphragm 7a.

The diaphragm 7a serves as a strain-generation portion of the pressure sensor and closes the one end of the pressure introduction hole 7d. The above-mentioned material of precipitation-hardened stainless steel (for example, SUS630) imparts an appropriate mechanical strength and an appropriate spring property to the diaphragm 7a. Application of pressure of the fluid flowing into the pressure introduction hole 7d of the pressure-detecting element 7 to the inner surface of the diaphragm 7a causes the diaphragm 7a to be deformed elastically.

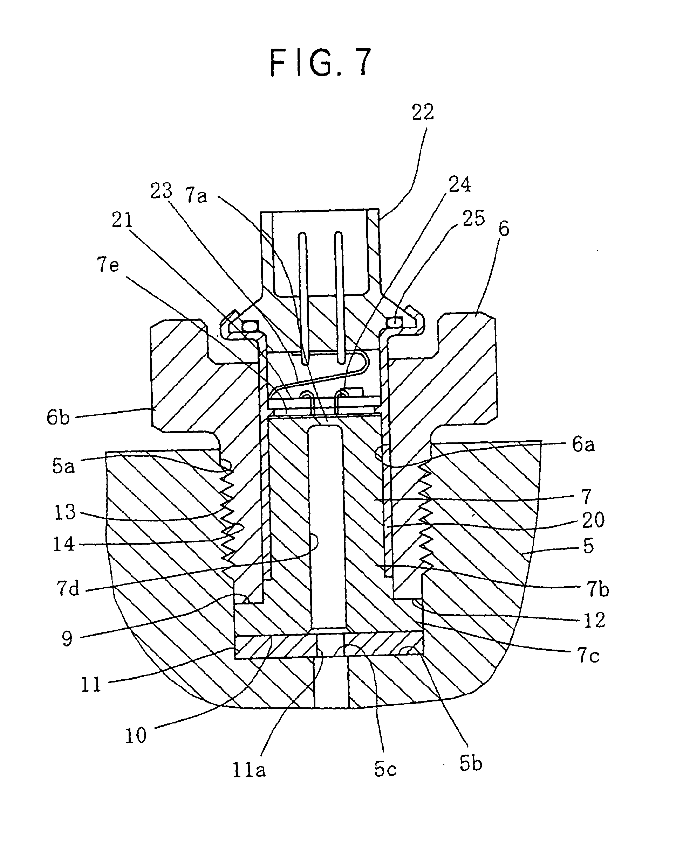

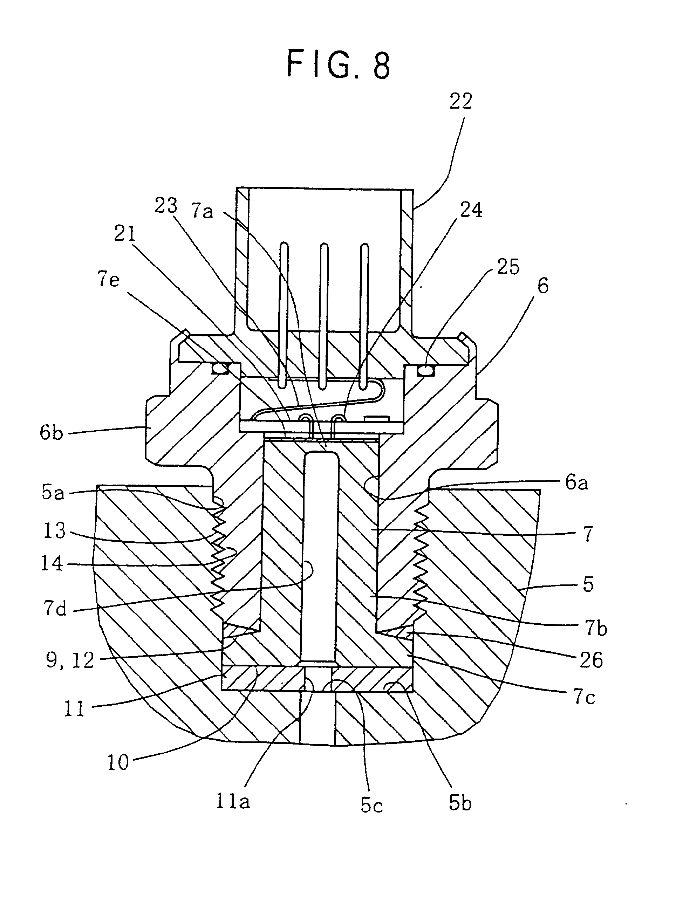

The thin-film type strain gage 7e is provided through the insulating film (not shown) on the outer surface of the diaphragm 7a, which is opposite to the above-mentioned inner surface to which the pressure is applied. The insulating film is formed of silicon oxide (SiO₂) into a thin film. The thin-film type strain gage 7e is composed of a silicon film, which is formed on the above-mentioned insulating film in accordance with a method for manufacturing a silicon film piezoresistance element, which is disclosed in Japanese Laid-Open Patent Application No. H6-70969. Deposition formation of the silicon oxide film and the silicon film can be achieved by the conventional plasma CVD method. The thin-film type strain gage 7e can be obtained by applying a photo-etching process to the above-mentioned silicon film. Elastic deformation of the diaphragm 7a caused by the pressure of the fluid causes the thin-film type strain gage 7e to be also deformed elastically, thus generating an electric signal corresponding to an amount of deformation. No material such as adhesive exists between the strain gage 7e and the metallic surface of the diaphragm 7a, thus causing no delay in transmission of strain and improving an output response speed. The strain gage 7e is located on the diaphragm 7a in place, thus causing no irregularity of properties (for example, an output span) and permitting to electrical connection to the output device (see FIGS. 7 and 8).

The upper surface of the seat plate 7c, i.e., the surface thereof locating on the diaphragm 7a side serves as a seating face 9 with which the joint member 6 comes into contact. The lower surface of the seat plate 7c, i.e., the surface thereof locating on the opposite side to the diaphragm 7a serves as a smooth pressure sealing surface 10. A metallic flat packing 11 exists between the pressure sealing surface 10 and the smooth connection face 5b of the fluid channel wall 5 to prevent the fluid from leaking between the pressure-detecting element 7 and the fluid channel wall 5. The flat packing 11 has a through-hole 11a for causing the fluid to flow from the fluid channel wall 5 into the pressure introduction hole 7d.

The joint member 6 is formed into a tubular body in which the pressure-detecting element 7 is received. The joint member 6 is provided at its bottom facing the above-mentioned seat plate 7c with a smooth contacting face 12 with which the seating face 9 of the seat plate 7c comes into contact. The diaphragm 7a and the support base 7b of the pressure-detecting element 7 are inserted into an insertion hole 6a formed in the joint member 6 along the axial direction thereof so that the seating face 9 of the seat plate 7c comes into contact with the contacting face 12 of the joint member 6. The joint member 6 has on its upper portion a hexagonal portion 6b with which a tool such as a spanner is to be engaged. A sealing force application device for applying a sealing force to the above-mentioned pressure sealing surface 10 is provided on an intermediate portion between the hexagonal portion 6b and the contacting face 12 of the joint member 6. The sealing force application device is composed as a screw connection system. More specifically, a male screw portion 13 is formed on the joint member 6 and a female screw portion 14 is formed on the fluid channel wall 5. A turning operation of the joint member 6 is carried out above the fluid channel wall 5 with the use of the tool engaging with the hexagonal portion 6b, thus ensuring a fastened state of the joint member 6. Thrust applied in the axial direction of the hexagonal portion 6b by screwing the joint member 6 into the fluid channel wall 5 causes the contacting face 12 provided at the lower end of the joint member 6 to come into close contact with the seating face 9 of the pressure-detecting element 7 and further causes the pressure sealing surface 10 of the seat plate 7c, which is opposite to the seating face 9, to press the packing 11 serving as the sealing member against the connection face 5b of the fluid channel wall 5. As a result, the packing 11 is compressed between the pressure sealing surface 10 and the connection face 5b so as to come into close contact with them. With respect to material for forming the sealing member such as the packing 11 or the like, it is preferable to use mild steel or stainless steel in case where the pressure sensor is to be used under pressure of for example 200 Mpa or more. According to the above-described structure, it is possible to ensure a pressure-tight condition at the connection portion between the pressure-detecting element 7 and the opening end 5c of the fluid channel wall 5, thus permitting flow of a high-pressure fluid into the pressure introduction hole 7d in a proper manner without coming toward the connection portion between the joint member 6 and the pressure-detecting element 7.

In addition, there is provided above the hexagonal portion 6b of the joint member 6 a mechanism for holding the output device (see FIGS. 7 and 8) for outputting an electric signal.

The sealing force application device, which is composed of the male screw portion 13 and the female screw portion 14 and used in combination with the hexagonal portion 6b, may be substituted by a combination of a flange and a recess into which the flange is fitted.

The seating face 9 of the pressure-detecting element 7 may be secured to the contacting face 12 of the joint member 6 by welding or the other fixing method. According to such a structure of the pressure sensor, pressure of the fluid is not applied to the welding portion of the seating face 9 with the contacting face 12, resulting in no occurrence of tensile stress in the welding portion. In addition, the welding portion does not come into contact with the fluid. Accordingly, there is no need to consider improvement in mechanical strength of the welding portion and the problem of degradation of performance due to corrosion can be avoided.

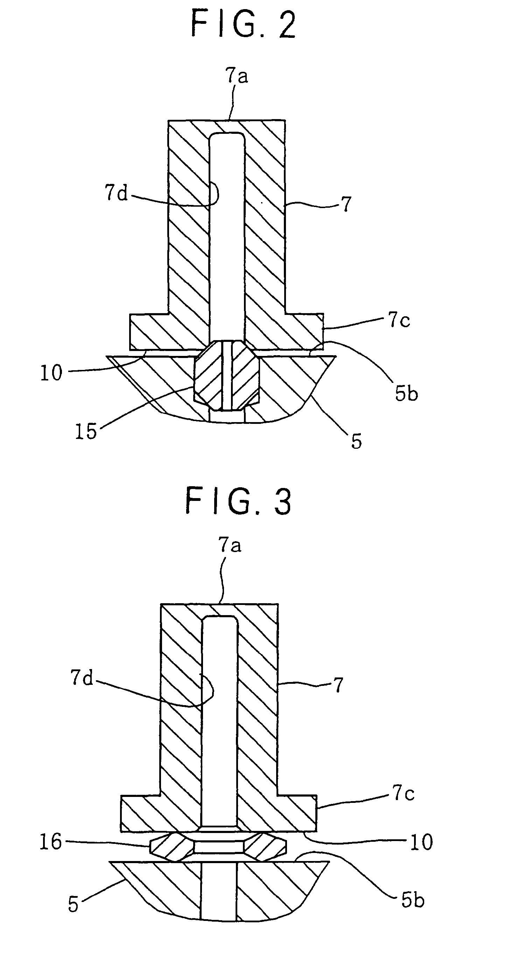

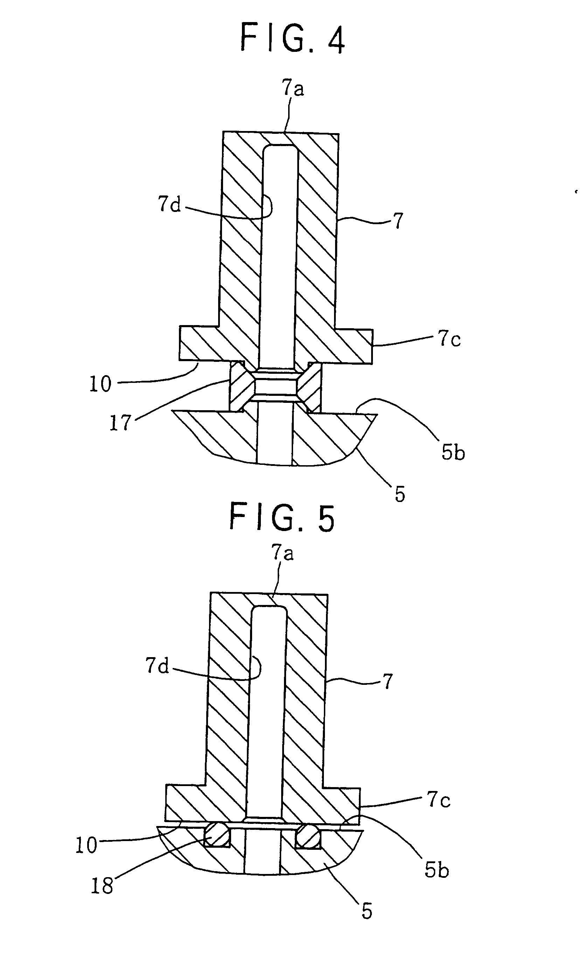

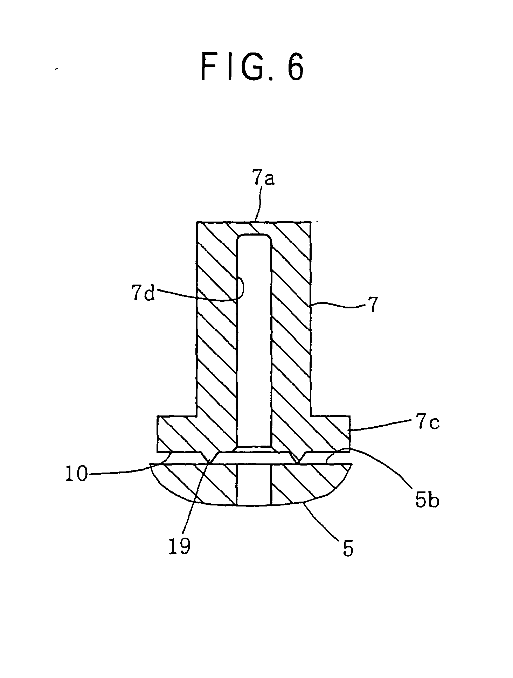

With respect to the sealing method in the above-described pressure sealing surface 10, it is preferable to adopt a metallic sealing structure in which the metallic portions come into contact with each other, in the light of the use under the extra-high pressure. There may be used as such a sealing method, in addition to the metallic flat packing 11 as shown in FIG. 1, a metallic conical packing 15 as shown in FIG. 2, a metallic lens-shaped packing 16 (i.e., a packing having on the upper and lower ends of the lens-shaped member with sealing surfaces, respectively) as shown in FIG. 3, the other metallic lens-shaped packing 17 (i.e., a packing having opposite recess portions with tapers, which serve as the sealing surfaces) as shown in FIG. 4, a metallic O-shaped ring as shown in FIG. 5 or a metallic C-shaped ring. It may also be adopted a direct sealing method in which a ring-shaped projection 19, which is formed on the pressure sealing surface 10 of the seat plate 7c, is pressed against the connection face 5b of the fluid channel wall 5 so as to provide the sealing structure, as shown in FIG. 6.

In the second embodiment of the pressure sensor as shown in FIG. 7, the joint member 6 is connected to the pressure-detecting element 7 so as to permit a relative movement to each other. More specifically, the joint member 6 is rotatable around the tubular support base 7b of the pressure-detecting element 7 and slidable along the tubular support base 7b.

The support base 7b of the pressure-detecting element 7 is inserted into a tubular case 20 and fixed thereto by welding. The tubular case 20 is prepared by applying working such as a press-forming, a cutting and bending process or the like to a metallic sheet formed for example of SUS430. The tubular case 20 stands to extend upward from the diaphragm 7a of the pressure-detecting element 7.

The tubular case 20 is fitted into the joint member 6, which is formed of steel for general structural purpose and subjected to a plating process (for example, an electroless nickel plating process or a 25 galvanizing process). The support base 7b is fitted into the joint member 6 before carrying out the fitting operation of the tubular case 20. In case where the tubular case 20 has the different shape and structure, the support base 7b may be fitted into the joint member 6 after carrying out the fitting operation of the tubular case 20. There is provided between the outer periphery of the tubular case 20 and the inner periphery of the insertion hole 6a of the joint member 6 with an extremely small clearance by which the joint member 6 is rotatable and slidable relative to the support base 7b.

There is provided above the diaphragm 7a locating in the tubular case 20 an output device for outputting a fluid pressure in the form of an electric signal. More specifically, an electric circuit board 21 including an amplification circuit and the like is stationarily held above and near the diaphragm 7a in the tubular case 20, a connector 22 is stationarily held above the electric circuit board 21 and the circuit board 21 and the connector 22 are electrically connected to each other by a flexible board 23.

The electric circuit board 21, which comprises a laminate-ceramic board, a glass-epoxy board or the like, is secured to the tubular case 20 by adhesive or the other fixing means. The electric circuit board 21 and the flexible board 23 are electrically connected to the thin-film type strain gage 7e by means of bonding wires 24.

The connector, which is formed of resin material such as PBT (polybutylene-terephthalate) resin, ABS (acrylonitrile-butadien-styrene) resin, PPS (polyphenylene-sulfide) resin or the like, is secured to the tubular case 20 by crimping or the other fixing means. An O-ring 25 for sealing the tubular case 20 is provided in the crimped portion. The electric circuit board 21 is electrically connected to the connector 22 by the flexible board 23.

The pressure sensor having the above-described structure can be fixed to the fluid channel wall 5 by urging the pressure sealing surface 10 of the seat plate 7c of the pressure-detecting element 7 against the connection face 5b of the fluid channel wall 5 to hold the pressure-detecting element 7 on the fluid channel wall 5 and turning the joint member 6. Turn of the joint member 6 causes the male screw portion 13 to engage with the female screw portion 14, thus generating thrust in the axial direction of the joint member 6. Such thrust causes the contacting face 12 provided at the lower end of the joint member 6 to come into close contact with the seating face 9 of the pressure-detecting element 7 and further causes the pressure sealing surface 10 of the seat plate 7c, which is opposite to the seating face 9, to press the packing 11 serving as the sealing member against the connection face 5b of the fluid channel wall 5. As a result, the packing 11 is compressed between the pressure sealing surface 10 and the connection face 5b so as to come into close contact with them. The portion ranging from the pressure-detecting element 7 to the connector 22 can be kept static relative to the fluid channel wall 5 during a fastening operation of the joint member 6, thus making it possible to determine accurately the posture and position of the connector 22 on the fluid channel wall 5.

### <THIRD EMBODIMENT>

In the third embodiment of the present invention, the joint member 6 is fixed to the pressure-detecting element 7 as shown in FIG. 8, unlike the pressure sensor of the second embodiment of the present invention. More specifically, the seating face 9 of the seat plate 7c of the pressure-detecting element 7 abuts against the contacting face 12 of the joint member 6, which is formed of for example SUS304, SUS430 or the like to which welding can be applied. The seating face 9 and the contacting face 12 are connected to each other by welding (for example, a laser welding).

In such a structure, the pressure sealing surface 10 is provided on the lower surface of the seat plate 7c of the pressure-detecting element 7 and the pressure sealing surface 10 is urged against the connection face 5b of the fluid channel wall 5 through the packing 11. Accordingly, pressure of the fluid is not applied to the welding portion 26, resulting in no occurrence of tensile stress in the welding portion 26. In addition, the welding portion 26 does not come into contact with the fluid. Accordingly, only consideration of mechanical strength of the welding portion during the fastening operation of the joint member 6 suffices. Further, there is no need to ensure pressure-tight connection at the welding portion 26.

The connector 22 of the pressure sensor is fixed to the joint member 6 by applying a crimping method to a thin portion at the upper end of the joint member 6 so as to enclose the sealing O-shaped ring 25.

According to the present invention as described in detail, it is possible to prevent fluid from coming into contact with the connected area of the joint member and the pressure-detecting element of the pressure sensor, ensure a condition that, even when welding is applied to the connecting portion between the joint member and the pressure-detecting element, welding heat does not exert adverse influence on the thin-film type strain gage of the pressure-detecting element, and avoid the contact of the welded portion with the fluid. It therefore becomes possible to detect extra-high pressure of for example 200 MPa or more. In addition, it is possible to provide an easy mounting operation of the joint member, which is suitable for purposes and demands of a user, thus permitting to manufacture of the joint member in correspondence to a number of modifications of the joint member. Further, the pressure-detecting element is separately formed from the joint member, with the result that only the pressure-detecting elements can be placed in the vacuum chamber of an apparatus for forming a thin film on the diaphragm. Accordingly, the single step for forming the thin film leads to manufacture of a plurality of pressure sensors, thus improving manufacturing efficiency of the pressure sensors.

## Claims

1. A pressure sensor comprising:
a joint member (6) for securing a pressure sensor body to a fluid channel wall (5) for fluid; and
a pressure-detecting element (7) mounted on the joint member (6), said pressure-detecting element being separately formed from said joint member, wherein
said joint member (6) is arranged to be fitted into a recess portion (5a)
formed in the fluid channel wall (5) so that the pressure-detecting element (7) is received in the recess portion (5a);
said pressure-detecting element (7) has a pressure sealing surface (10);
said joint member (6) is provided with a sealing force application device (13, 14) comprising a male screw portion (13) formed on an outer peripheral surface of the joint member (6), said male screw portion (13) being capable of engaging with a female screw portion (14) formed in the fluid channel wall (5);
the pressure sensor **characterized in that**:
it further comprises a
metallic packing (11) arranged to be disposed between the pressure sealing surface (10) of the pressure-detecting element (7) and a bottom of the recess portion (5a) of the fluid channel wall (5); and
said sealing force application device (13, 14) is adapted for applying a sealing force between said pressure sealing surface (10) and said metallic packing (11), and between said metallic packing (11) and said fluid channel wall (5).

2. The pressure sensor as claimed in Claim 1, wherein:
said pressure-detecting element (7) has a pressure detection portion, said pressure detection portion comprising a thin-film type strain gage (7e), which is provided on a metallic diaphragm (7a) of the pressure-detecting element (7) through an insulating film.

3. The pressure sensor as claimed in Claim 1, wherein:
said joint member (6) and said pressure-detecting element (7) are connected with each other so as to permit a relative movement to each other.

4. The pressure sensor as claimed in Claim 1, wherein:
said joint member (6) and said pressure-detecting element (7) are fixed to each other.

5. The pressure sensor as claimed in Claim 1. wherein:
said pressure-detecting element (7) has at least one part, which is formed through a forging method.

6. A pressure sensor comprising:
a joint member (6) for securing a pressure sensor body to a fluid channel wall (5) for fluid; and
a pressure-detecting element (7) mounted on the joint member (6), said
pressure-detecting element being separately formed from said joint member, wherein
said joint member (6) is arranged to be fitted into a recess portion (5a)
formed in the fluid channel wall (5) so that the pressure-detecting element (7) is received in the recess portion (5a);
said joint member (6) is provided with a sealing force application device (13, 14) comprising a male screw portion (13) formed on an outer peripheral surface of the joint member (6), said male screw portion (13) being capable of engaging with a female screw portion (14) formed in the fluid channel wall (5); and said pressure-detecting element (7) has a pressure sealing surface (10);
the pressure sensor **characterized in that**:
said pressure sealing surface has a ring-shaped projection (19), which is arranged to come into contact with the fluid channel wall (5); and
said sealing force application device (13, 14) is adapted for applying a sealing force between said ring-shaped projection (19) and said fluid channel wall (5).

7. The pressure sensor as claimed in Claim 6, wherein:
said pressure-detecting element (7) has a pressure detection portion, said pressure detection portion comprising a thin-film type strain gage (7e), which is provided on a metallic diaphragm (7a) of the pressure-detecting element (7) through an insulating film.

8. The pressure sensor as claimed in Claim 6, wherein:
said joint member (6) and said pressure-detecting element (7) are connected with each other so as to permit a relative movement to each other.

9. The pressure sensor as claimed in Claim 6, wherein:
said joint member (6) and said pressure-detecting element (7) are fixed to each other.

10. The pressure sensor as claimed in Claim 6, wherein:
said pressure-detecting element (7) has at least one part, which is formed through a forging method.

## Patentansprüche

1. Drucksensor, enthaltend:
ein Verbindungselement (6), um einen Drucksensorkörper an einer Fluidkanalwand (5) für ein Fluid zu befestigen; und
ein Druckerfassungselement (7), das am Verbindungselement (6) angebracht ist, wobei das Druckerfassungselement separat vom Verbindungselement ausgebildet ist, wobei
das Verbindungselement (6) so beschaffen ist, dass es in einen Aussparungsabschnitt (5a) passt, der in der Fluidkanalwand (5) ausgebildet ist, so dass das Druckerfassungselement (7) im Aussparungsabschnitt (5a) aufgenommen ist;
wobei das Druckerfassungselement (7) eine Druckdichtungsfläche (10) hat;
das Verbindungselement (6) mit einer Dichtungskraft-Ausübungsvorrichtung (13, 14) ausgestattet ist, die einen Gewindestiftabschnitt (13) enthält, der an einer Außenumfangsfläche des Verbindungselementes (6) ausgebildet ist, und der Gewindestiftabschnitt (13) in einen Gewindebuchsenabschnitt (14) eingreifen kann, der in der Fluidkanalwand (5) ausgebildet ist;
wobei der Drucksensor **dadurch gekennzeichnet ist, dass**:
er weiterhin eine Metalldichtung (11) enthält, die so beschaffen ist, dass sie zwischen der Druckdichtungsfläche (10) des Druckerfassungselementes (7) und einer Unterseite des Aussparungsabschnittes (5a) der Fluidkanalwand angeordnet ist; und
die Dichtungskraft-Ausübungsvorrichtung (13, 14) dazu eingerichtet ist, eine Dichtungskraft zwischen der Druckdichtungsfläche (10) und der Metalldichtung (11) und zwischen der Metalldichtung (11) und der Fluidkanalwand (5) auszuüben.

2. Drucksensor nach Anspruch 1, bei dem:
das Druckerfassungselement (7) einen Druckerfassungsabschnitt hat, wobei der Druckerfassungsabschnitt einen Dünnfilm-Dehnungsmessstreifen (7e) enthält, der an einer Metallmembran (7a) des Druckerfassungselementes (7) mittels eines Isolierfilmes angebracht ist.

3. Drucksensor nach Anspruch 1, bei dem:
das Verbindungselement (6) und das Druckerfassungselement (7) miteinander verbunden sind, um so eine Relativbewegung zueinander zuzulassen.

4. Drucksensor nach Anspruch 1, bei dem:
das Verbindungselement (6) und das Druckerfassungselement (7) aneinander befestigt sind.

5. Drucksensor nach Anspruch 1, bei dem:
das Druckerfassungselement (7) wenigstens einen Teil hat, der durch ein Schmiedeverfahren ausgebildet ist.

6. Drucksensor, enthaltend:
ein Verbindungselement (6), um einen Drucksensorkörper an einer Fluidkanalwand (5) für ein Fluid zu befestigen; und
ein Druckerfassungselement (7), das am Verbindungselement (6) angebracht ist, wobei das Druckerfassungselement separat vom Verbindungselement ausgebildet ist, wobei
das Verbindungselement (6) so beschaffen ist, dass es in einen Aussparungsabschnitt (5a) passt, der in der Fluidkanalwand (5) ausgebildet ist, so dass das Druckerfassungselement (7) im Aussparungsabschnitt (5a) aufgenommen ist;
das Verbindungselement (6) mit einer Dichtungskraft-Ausübungsvorrichtung (13, 14) ausgestattet ist, die einen Gewindestiftabschnitt (13) enthält, der an einer Außenumfangsfläche des Verbindungselementes (6) ausgebildet ist, und der Gewindestiftabschnitt (13) in einen Gewindebuchsenabschnitt (14) eingreifen kann, der in der Fluidkanalwand (5) ausgebildet ist; und das Druckerfassungselement (7) eine Druckdichtungsfläche (10) hat;
wobei der Drucksensor **dadurch gekennzeichnet ist, dass**:
die Druckdichtungsfläche einen ringförmigen Vorsprung (19) hat, der so beschaffen ist, dass er mit der Fluidkanalwand (5) in Kontakt gelangt; und
die Dichtungskraft-Ausübungsvorrichtung (13, 14) dazu eingerichtet ist, eine Dichtungskraft zwischen dem ringförmigen Vorsprung (19) und der Fluidkanalwand (5) auszuüben.

7. Drucksensor nach Anspruch 6, bei dem
das Druckerfassungselement (7) einen Druckerfassungsabschnitt hat, wobei der Druckerfassungsabschnitt einen Dünnfilm-Dehnungsmessstreifen (7e) enthält, der an einer Metallmembran (7a) des Druckerfassungselementes (7) mittels eines Isolierfilmes angebracht ist.

8. Drucksensor nach Anspruch 6, bei dem:
das Verbindungselement (6) und das Druckerfassungselement (7) miteinander verbunden sind, um so eine Relativbewegung zueinander zuzulassen.

9. Drucksensor nach Anspruch 6, bei dem:
das Verbindungselement (6) und das Druckerfassungselement (7) aneinander befestigt sind.

10. Drucksensor nach Anspruch 6, bei dem:
das Druckerfassungselement (7) wenigstens einen Teil hat, der durch ein Schmiedeverfahren ausgebildet ist.

## Revendications

1. Détecteur de pression comportant :
un élément de joint (6) pour fixer un corps de détecteur de pression sur une paroi de canal de fluide (5) pour un fluide ; et
un élément détecteur de pression (7) monté sur l'élément de joint (6), ledit élément détecteur de pression étant formé séparément dudit élément de joint,
dans lequel
ledit élément de joint (6) est disposé pour être fixé dans une partie d'évidement (5a) formée dans la paroi de canal de fluide (5) de sorte que l'élément détecteur de pression (7) est reçu dans la partie d'évidement (5a) ;
ledit élément détecteur de pression (7) possède une surface d'étanchéité à la pression (10) ;
ledit élément de joint (6) est muni d'un dispositif d'application de force d'étanchéité (13, 14) comportant une partie de vis mâle (13) formée sur une surface périphérique externe d'un élément de joint (6), ladite partie de vis mâle (13) pouvant venir au contact d'une partie de vis femelle (14) formée dans la paroi de canal de fluide (5) ;
le détecteur de pression étant **caractérisé en ce que** :
il comporte en outre un boîtier métallique (11) agencé pour être disposé entre la surface d'étanchéité à la pression (10) de l'élément détecteur de pression (7) et un fond de la partie d'évidement (5a) de la paroi de canal de fluide (5) ; et
ledit dispositif d'application de force d'étanchéité (13, 14) est adapté pour appliquer une force d'étanchéité entre ladite surface d'étanchéité à la pression (10) et ledit boîtier métallique (11), et entre ledit boîtier métallique (11) et ladite paroi de canal de fluide (5) .

2. Détecteur de pression selon la revendication 1,
dans lequel :
ledit élément détecteur de pression (7) possède une partie de détection de pression, ladite partie de détection de pression comportant une jauge de contrainte de type à film mince (7e), qui est prévue sur un diaphragme métallique (7a) de l'élément détecteur de pression (7) à travers un film isolant.

3. Détecteur de pression selon la revendication 1,
dans lequel :
ledit élément de joint (6) et ledit élément détecteur de pression (7) sont reliés l'un à l'autre de manière à permettre un mouvement relatif l'un par rapport à l'autre.

4. Détecteur de pression selon la revendication 1,
dans lequel :
ledit élément de joint (6) et ledit élément détecteur de pression (7) sont fixés l'un à l'autre.

5. Détecteur de pression selon la revendication 1,
dans lequel :
ledit élément détecteur de pression (7) possède au moins une partie, qui est formée par un procédé de forgeage.

6. Détecteur de pression comportant :
un élément de joint (6) pour fixer un corps de détecteur de pression sur une paroi de canal de fluide (5) pour un fluide ; et
un élément détecteur de pression (7) monté sur l'élément de joint (6), ledit élément détecteur de pression étant séparément formé dudit élément de joint,
dans lequel
ledit élément de joint (6) est disposé pour être fixé dans une partie d'évidement (5a) formée dans la paroi de canal de fluide (5) de sorte que l'élément détecteur de pression (7) est reçu dans la partie d'évidement (5a) ;
ledit élément de joint (6) est muni d'un dispositif d'application de force d'étanchéité (13, 14) comportant une partie de vis mâle (13) formée sur une surface périphérique externe de l'élément de joint (6), ladite partie de vis mâle (13) pouvant venir en contact d'une partie de vis femelle (14) formée dans la paroi de canal de fluide (5) ; et
ledit élément détecteur de pression (7) possède une surface d'étanchéité à la pression (10) ;
le détecteur de pression étant **caractérisé en ce que** :
ladite surface d'étanchéité à la pression possède une partie saillante de forme annulaire (19), qui est agencée pour venir en contact de la paroi de canal de fluide (5) ; et
ledit dispositif d'application de force d'étanchéité (13, 14) est adapté pour appliquer une force d'étanchéité entre ladite partie saillante de forme annulaire (19) et ladite paroi de canal de fluide (5).

7. Détecteur de pression selon la revendication 6,
dans lequel :
ledit élément détecteur de pression (7) possède une partie de détection de pression, ladite partie de détection de pression comportant une jauge de contrainte à film mince (7e), qui est prévue sur un diaphragme métallique (7a) de l'élément détecteur de pression (7) à travers un film isolant.

8. Détecteur de pression selon la revendication 6,
dans lequel :
ledit élément de joint (6) et ledit élément détecteur de pression (7) sont reliés l'un à l'autre de manière à permettre un mouvement relatif l'un par rapport à l'autre.

9. Détecteur de pression selon la revendication 6,
dans lequel :
ledit élément de joint (6) et ledit élément détecteur de pression (7) sont fixés l'un à l'autre.

10. Détecteur de pression selon la revendication 6,
dans lequel :
ledit élément détecteur de pression (7) possède au moins une partie, qui est formée par l'intermédiaire d'un procédé de forgeage.
